Europäisches Patentamt

European Patent Office

Office européen des brevets

(11) Veröffentlichungsnummer: **0 382 178 B1**

(12) **EUROPÄISCHE PATENTSCHRIFT**

(45) Veröffentlichungstag der Patentschrift: **14.09.94**

(51) Int. Cl.⁵: **C07F 9/12**, C10M 105/74

(21) Anmeldenummer: **90102385.3**

(22) Anmeldetag: **07.02.90**

(54) **Verfahren zur Herstellung einer feuerbeständigen Flüssigkeit.**

(30) Priorität: **10.02.89 SU 4645063**

(43) Veröffentlichungstag der Anmeldung:
**16.08.90 Patentblatt 90/33**

(45) Bekanntmachung des Hinweises auf die
Patenterteilung:
**14.09.94 Patentblatt 94/37**

(84) Benannte Vertragsstaaten:
**AT BE DE FR GB IT**

(56) Entgegenhaltungen:
**US-A- 2 870 192**
**US-A- 3 639 544**

**CHEMICAL ABSTRACTS, Band 99, September 1983, Columbus, Ohio E.I. KAZAKOV et al."Possible use of phends from light-to-middle tar from the high-speed pyrolysisof lignite" Seite 389, Spalte 2, Zusam- menfas-sung-Nr. 99:73 544**

(73) Patentinhaber: **VSESOJUZNY TEPLOTECHNI-CHESKY NAUCHNO-ISSLEDOVATELSKY IN-STITUT imeni F.E. DZERZHINSKOGO
Ulitsa Avtozavodskaya, 14/23
Moskau (SU)**

(72) Erfinder: **Vilyanskaya, Genya Davydovna
Ulitsa 16 Parkovaya, 49,
korpus 1, kv.12
Moscow (SU)**
Erfinder: **Vainshtein, Albert Grigorievich
Tikhvinskaya ulitsa, 3,
korpus 1, kv. 82
Moscow (SU)**
Erfinder: **Razarenova, Margarita Mikhailovna
prosp. 60-letia Oktyabrya,25,
korpus 2,kv 43
Moscow (SU)**
Erfinder: **Salnikova, Galina Konstantinovna
Ultisa Shkolnaya, 8a. kv. 75
Moskovskaya oblast., Ivanteevka (SU)**
Erfinder: **Lysko, Vladimir Vladimirovich
1 Spaskonaliv kovsky pereulok,
19, kv. 53
Moscow (SU)**
Erfinder: **Bakai, Valentin Savelievich
Ulitsa Mira, 54, kv. 6
Tolyatti (SU)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 382 178 B1

CHEMICAL ABSTRACTS, Band 89, Oktober/November 1978, Columbus, Ohio G.F. WOLFE et. al. "Experience with phosphate ester fluids as industrial steam turbine-generator lubricants" Seite 129, Spalte 2, Zusammenfassung Nr. 89:149 096 & Lubr. Eng. 1978, 34(8) 413-20

et al. "Experience with phosphate ester fluids as industrial steam turbine-generator lubricants" Seite 129, Spalte 2, Zusam- men- fassung-Nr. 89:149 096

74 Vertreter: Patentanwälte Zellentin & Partner
Zweibrückenstrasse 15
D-80331 München (DE)

**Beschreibung**

Die Erfindung bezieht sich auf das Gebiet der Chemie phosphororganischer Verbindungen und betrifft insbesondere ein Verfahren zur Herstellung einer feuerbeständigen Flüssigkeit, die besonders in der Energie-, Hütten- und Kohlenindustrie im Maschinenbau als Hydraulik- und Schmierflüssigkeit für die Verwendung zum Beispiel in Schmierölsystemen von Turbinen mit einer Dampftemperatur bis 600 °C, in hydraulischen Systemen von Kohlefördermaschinen, in hydraulischen Systemen von Spritzgußmaschinen usw. angewendet werden.

An die in diesen Systemen als hydraulische und schmierende Flüssigkeiten verwendeten feuerbeständigen Flüssigkeiten werden harte Anforderungen nach einer Reihe von Kennziffern gestellt, darunter auch:
- an die Zeit der Entlüftung der Flüssigkeiten, die durch die Zeit für die Entgasung der in diese geratenen Luft bestimmt wird;
- an die Erstarrungstemperatur dieser Flüssigkeit, was besonders bei der Arbeit von Systemen wichtig ist, in denen diese feuerbeständigen Flüssigkeiten beispielsweise in nördlichen Breiten oder unter Winterverhältnissen benutzt werden.

Ebenso dürfen solche feuerbeständigen Flüssigkeiten in keine Umsetzung mit Wasser treten, das in diese im Betriebsprozeß geraten kann.

Die feuerbeständigen Flüssigkeiten sollen eine bestimmte kinematische Viskosität (15-28 mm$^2$/s), eine möglichst lange Lebensdauer usw. aufweisen.

Bekannt ist ein Verfahren zur Herstellung einer feuerbeständigen Flüssigkeit auf der Grundlage von Trixylynylphosphat (BE, A, 52533).

Man verestert nach diesem Verfahren eine Phosphorverbindung (zum Beispiel Phosphoroxychlorid, Orthophosphorsäure und andere) in Gegenwart eines Katalysators mit der Xylenolfraktion des Verarbeitungsproduktes eines Brennstoffes mit der Siedetemperatur von 212-222 °C, und danach trennt man aus der Reaktionsmasse die Fraktion des gebildeten Produktes und reinigt das erhaltene Endprodukt.

Als Katalysator werden in einem Verfahren Verbindungen der Metalle der II. Gruppe des Elementensystems, zum Beispiel Magnesiumdichlorid, Bariumdichlorid usw. benutzt.

Man nutzt die nach diesem Verfahren erhaltene feuerbeständige Flüssigkeit insbesondere als Turbinenöl bzw. Hydraulikflüssigkeit.

Jedoch hat die nach diesem Verfahren hergestellte feuerbeständige Flüssigkeit eine ungenügend hohe Temperatur der Selbstentzündung (etwa 750°C).

Bekannt ist ein Verfahren zur Herstellung einer feuerbeständigen Flüssigkeit durch Veresterung von Phosphoroxychlorid in Gegenwart eines Katalysators mit einem Gemisch, das aus Xylenol, Phenol und der Fraktion des Verarbeitungsproduktes eines Naturbrennstoffes mit anschließender Trennung aus der Reaktionsmasse der Fraktion des gebildeten Produktes und Reinigung derselben bis zur Erhaltung des Endproduktes (SU, A, 987971).

In diesem Verfahren verwendet man 3,4-Xylenol, als Fraktion der Verarbeitung eines Naturbrennstoffes die Fraktion von Xylenolen mit einer Siedetemperatur von 212-224 °C und als Katalysator - Magnesiumchlorid.

Man verwirklicht die Veresterung bei 140 °C innerhalb von etwa 20 Stunden, die erhaltene Reaktionsmasse fraktioniert man unter einem Druck von 13-20 mbar, trennt die Fraktion des gebildeten Produktes mit einer Siedetemperatur von 250-270 °C ab und reinigt diese Fraktion, indem man sie zuerst mit einer Alkalilösung und dann mit Wasser bis zur Erhaltung des Endproduktes wäscht.

Die durch dieses Verfahren hergestellte feuerbeständige Flüssigkeit wird beispielsweise als Schmierstoff und auch als hydraulische Flüssigkeit in Dampfturbinen angewendet.

Die nach diesem Verfahren erhaltene feuerbeständige Flüssigkeit hat eine kinematische Viskosität von 15,8-21 mm$^2$/s (bei 50 °C), eine Dichte von 1,18-1,19 g/cm$^3$ und eine Selbstentzündungstemperatur von etwa 800 °C.

Diese feuerbeständige Flüssigkeit weist eine hohe Oxydationsstabilität und hohe demulgierende Eigenschaften auf und erfordert keine Regeneration im Prozeß der Nutzung, jedoch hat die erhaltene feuerbeständige Flüssigkeit keine gemäß den Betriebsverhältnissen erforderliche Entlüftungszeit, ihre Erstarrungstemperatur ist relativ hoch, dadurch wird deren Verwendung und Aufbewahrung insbesondere unter Winterverhältnissen erschwert.

Ein Ziel der vorliegenden Erfindung ist es, eine feuerbeständige Flüssigkeit mit einer verminderten Entlüftungszeit und einer erniedrigten Erstarrungstemperatur zu erhalten.

Der vorliegenden Erfindung liegt die Aufgabe zugrunde, ein Verfahren zur Herstellung einer feuerbeständigen Flüssigkeit mit einer Zusammensetzung des zu veresternden Gemisches anzugeben, die es ermöglicht, eine Flüssigkeit mit verminderter Entlüftungszeit und einer niedrigen Erstarrungstemperatur zu

3

gewinnen.

Das Wesen der Erfindung besteht darin, daß man im Verfahren zur Herstellung einer feuerbeständigen Flüssigkeit durch Veresterung von Phosphoroxychlorid in Gegenwart eines Katalysators mit einem Gemisch, das aus Xylenol, Phenol und der Fraktion des Verarbeitungsproduktes eines Naturbrennstoffes mit anschließender Trennung aus der Reaktionsmasse der Fraktion des gebildeten Produktes und deren Reinigung bis zur Erhaltung des Endproduktes, erfindungsgemäß, zur Veresterung ein Gemisch verwendet, das 3,5-Xylenol als Xylenol bei folgendem Verhältnis der Komponenten, Gew.-%, enthält:

| 3,5-Xylenol | 30-55 |
| Fraktion des Verarbeitungsproduktes eines Naturbrennstoffes mit einer Siedetemperatur von 216-224 °C | 18-22 |
| Phenol | der Rest. |

Es ist dabei wünschenswert, Titantetrachlorid als Katalysator auszunutzen.

Die nach diesem Verfahren hergestellte Flüssigkeit weist eine erniedrigte Temperatur der Erstarrung (bis -30 °C) auf und hat eine Entlüftungszeit von bis 90 s.

Außerdem hat dieses feuerbeständige Flüssigkeit eine hohe Thermooxydationsstabilität und hohe demulgierende Eigenschaften sowie erfordert keine Regeneration im Prozeß der Ausbeutung.

Die nach dem erfindungsgemäßen Verfahren hergestellte feuerbeständige Flüssigkeit ist stabil gegen Hydrolyse und hat eine lange (über 5 Jahre) Lebensdauer.

Dabei können die Betriebseigenschaften dieser Flüssigkeit nach Beendigung der Betriebszeit wiederhergestellt werden.

Die Verwendung von Titantetrachlorid im erfindungsgemäßen Verfahren ermöglicht es, die Veresterungsdauer bis auf 12 Stunden zu verkürzen.

Das erfindungsgemäße Verfahren zur Herstellung einer feuerbeständigen Flüssigkeit wird wie folgt durchgeführt.

Phosphoroxychlorid wird in ein Reaktionsgefäß eingebracht, und man verwirklicht dessen Veresterung in Gegenwart eines Katalysators mit einem Gemisch, das aus 3,5-Xylenol, Phenol und einer Fraktion des Verarbeitungsproduktes von Naturbrennstoff besteht, bei 160-140 °C.

Als Katalysator der Veresterung kann jeder beliebige übliche Veresterungskatalysator ausgenutzt werden, empfehlenswert ist die Verwendung von Titantetrachlorid. Das für die Veresterung genutzte Gemisch enthält folgende Komponente bei einem Verhältnis, Gew.-%, wie folgt:

| 3,5-Xylenol | 30-55 |
| Fraktion des Verarbeitungsproduktes von Naturbrennstoff mit einer Siedetemperatur von 216-224 °C | 18-22 |
| Phenol | alles übrige. |

Dabei kann synthetisches 3,5-Xylenol als 3,5-Xylenol angewandt werden.

Als Fraktion des Produktes der Verarbeitung von Naturbrennstoff mit einer Siedetemperatur von 216-224 °C benutzt man beispielsweise Fraktionen des Verarbeitungsproduktes mit dem genannten Siedetemperaturintervall von Steinkohlenteer oder anderen Arten von Naturbrennstoff.

Nach Beendigung des Veresterungsprozesses (seine Dauer beträgt 12-20 Stunden) unterwirft man die erhaltene Reaktionsmasse einer Destillation unter einem verminderten Druck (13-20 mbar) und entnimmt die Fraktion des Produktes mit einer Siedetemperatur von 250-270 °C, die man reinigt und bis zur Erhaltung des Endproduktes trocknet, das wird auf folgende Weise durchgeführt: zuerst wird sie mit wäßriger Alkalilösung und dann mit Wasser bis zur neutralen Reaktion ausgewaschen, danach nach beliebigem bekannten Verfahren bei 105 °C getrocknet.

Der Reinigungsgrad dieser Fraktion wird nach der Säurezahl und ihrem Gehalt an freien Phenolen kontrolliert.

Darauffolgend ermittelt man nach den traditionellen Methoden physikalisch-chemische und Betriebseigenschaften der erhaltenen feuerbeständigen Flüssigkeit.

Wenn man für die Veresterung von Phosphoroxychlorid ein Gemisch ausnutzt, das 3,5 Xylenol in einer Menge von mehr als 55 % enthält, so steigt die kinematische Viskosität der nach dem erfindungsgemäßen Verfahren erhaltenen feuerbeständigen Flüssigkeit an (über 28 mm$^2$/s), wodurch die Zuverlässigkeit des diese Flüssigkeit nutzenden Systems herabgesetzt wird.

4

Wenn der Gehalt an 3,5-Xylenol im genannten Gemisch für die Veresterung von Phosphoroxychlorid weniger als 30 Gew.% wird, verschlechtern sich die Schmiereigenschaften der erfindungsgemäßen feuerbeständigen Flüssigkeit.

Wenn man im Gemisch für die Veresterung von Phosphoroxychlorid den Gehalt an Fraktion des Verarbeitungsproduktes von Naturbrennstoff mit einer Siedetemperatur von 216-224 °C auf unter 18 Gew.-% vermindert, so wird die Widerstandsfähigkeit der erfindungsgemäßen feuerbeständigen Flüssigkeit in bezug auf Wasser herabgesetzt, und die Erhöhung des Gehaltes an dieser Fraktion im genannten Gemisch führt zu Zusatzaufwendungen an Energie und Rohstoff, wobei die Betriebskennwerte der erhaltenen feuerbeständigen Flüssigkeit nicht verbessert werden.

Wenn das Siedetemperaturintervall der im erfindungsgemäßen Verfahren ausgenutzten Fraktion des Produktes der Verarbeitung von Naturbrennstoff niedriger als 216-224 °C oder höher als 216-224 °C ist, so führt das zur Steigerung der Toxizität der feuerbeständigen Flüssigkeit.

Zum besseren Verständnis der Erfindung werden folgende Beispiele im Rahmen des Anspruchsumfangs angeführt.

Beispiel 1

Das erfindungsgemäße Verfahren zur Herstellung einer feuerbeständigen Flüssigkeit wird wie folgt durchgeführt.

Phosphoroxychlorid wird in ein Reaktionsgefäß eingebracht und mit einem Gemisch, das aus folgenden Komponenten in Gew.-% besteht:

| | |
|---|---|
| 3,5-Xylenol | 30 |
| Fraktion des Verarbeitungsproduktes von Steinkohlenteer mit einer Siedetemperatur von 216-224 °C | 18 |
| Phenol | alles übrige |

im äqivalenten Verhältnis bei 140 °C genommen, in Gegenwart von Titantetrachlorid als Katalysator während 12 Stunden verestert. Die erhaltene Reaktionsmasse wird unter einem verminderten Druck (13-20 mbar) destilliert, und man nimmt die Fraktion des Produktes mit einer Siedetemperatur von 250-270 °C ab, die man reinigt und trocknet bis zur Erhaltung des Endproduktes auf folgende Weise: zuerst wäscht man sie mit einer 3%igen wäßrigen NaOH-Lösung und dann mit Wasser bis zur Neutralreaktion aus, danach trocknet man sei bei 105 °C. Die Kontrolle des Reinigungsgrades dieser Fraktion führt man nach der Säurezahl und dem Gehalt an freien Phenolen durch.

Man ermittelt die physikalisch-chemischen und Betriebseigenschaften der erhaltenen feuerbeständigen Flüssigkeit nach herkömmlichen Methoden.

Ergebnisse der Prüfungen sind in der nachstehenden Tabelle 1 angeführt.

Beispiel 2

Das erdfindungsgemäße Verfahren zur Herstellung einer feuerbeständigen Flüssigkeit wird analog dem Beispiel 1 durchgeführt, aber dabei benutzt man für die Veresterung von Phosphoroxychlorid ein Gemisch, das aus folgenden Komponenten besteht, Gew.-%:

| | |
|---|---|
| 3,5-Xylenol | 40 |
| Fraktion des Verarbeitungsproduktes von Steinkohlenteer mit einer Siedetemperatur von 216-224 °C | 20 |
| Phenol | der Rest. |

Man bestimmt die physikalisch-chemischen und Betriebseigenschaften der erhaltenen feuerbeständigen Flüssigkeit. Die Ergebnisse der Prüfungen sind in den nachstehenden Tabellen 1 und 2 angegeben.

Beispiel 3

Das erfindungsgemäße Verfahren zur Herstellung einer feuerbeständigen Flüssigkeit wird analog dem Beispiel 1 durchgeführt, aber man benutzt dabei für die Veresterung ein Gemisch, das aus folgenden Komponenten, Gew.-%, besteht:

| | |
|---|---|
| 3,5-Xylenol | 50 |
| Fraktion des Verarbeitungsproduktes von Steinkohlenteer mit einer Siedetemperatur von 216-224 °C | 22 |
| Phenol | alles übrige. |

Man bestimmt die physikalisch-chemischen und Betriebseigenschaften der erhaltenen feuerbeständigen Flüssigkeit. Ergebnisse der Prüfungen sind in den nachstehenden Tabellen 1 und 2 angeführt.

Beispiel 4

Das erfindungsgemäße Verfahren zur Herstellung einer feuerbeständigen Flüssigkeit wird analog dem Beispiel 1 durchgeführt, aber für die Veresterung verwendet man ein Gemisch, das aus folgenden Komponenten, Gew.-%, besteht:

| | |
|---|---|
| 3,5-Xylenol | 55 |
| Fraktion des Verarbeitungsproduktes von Steinkohlenteer mit einer Siedetemperatur von 216-224 °C | 20 |
| Phenol | alles übrige. |

Man bestimmt die physikalisch-chemischen und Betriebseigenschaften der erhaltenen feuerbeständigen Flüssigkeit. Ergebnisse der Prüfungen sind in der nachstehenden Tabelle 1 angeführt.

Tabelle 1

| Feuerbeständige Flüssigkeit | Kinematische Viskosität bei 50 °C, mm$^2$/s | Erstarrungstemperatur, °C | Entlüftungszeit, s | Temperatur der Selbstentzündung, °C |
|---|---|---|---|---|
| Nach Beispiel 1 | 15,80 | -20 | 160 | 800 |
| Nach Beispiel 2 | 19,80 | -30 | 90 | 801 |
| Nach Beispiel 3 | 28,0 | -23 | 150 | 800 |
| Nach Beispiel 4 | 26,51 | -25 | 150 | 800 |

Tabelle 2

| Eigenschaften der feuerbeständigen Flüssigkeit | Feuerbeständige Flüssigkeit gemäß: | | | |
|---|---|---|---|---|
| | den bekannten Lösungen | | dem Beispiel 2 | dem Beispiel 3 |
| | BE,A 52533 | SU,A 987971 | | |
| 1 | 2 | 3 | 4 | 5 |
| 1. Säurezahl, mg KOH je 1g feuerbeständige Flüssigkeit | 0,04 | 0,01 | 0,02 | 0,04 |
| 2. Optische Dichte (mittlere) | 1,062 | 1,172 | 0,060 | 0,024 |
| 3. Dichte, g/cm³ | 1,162 | 1,179 | 1,180 | 1,169 |
| 4. pH des wäßrigen Auszuges | 7,39 | 8,10 | 7,20 | 7,01 |
| 5. Gehalt an mechanischen Beimengungen in der erhaltenen feuerbeständigen Flüssigkeit, % | 0,003 | 0,022 | 0,005 | 0,001 |
| 6. Selbstentzündungstemperatur, °C | 750 | 800 | 800 | 800 |
| 7. Beständigkeit gegen Hydrolyse: a) Säurezahl, mg KOH je 1g feuerbeständige Flüssigkeit | 0,22 | 0,60 | 0,40 | 0,22 |
| b) Menge d.Rückstandes, Gew.-% | 0,016 | 0,150 | 0,020 | 0,020 |
| 8. Gehalt an freien Phenolen, Gew.-% | 0,099 | 0,270 | 0,10 | 0,030 |

Die nach dem erfindungsgemäßen Verfahren hergestellte Flüssigkeit weist eine verminderte Erstarrungstemperatur auf und hat eine verkürzte Zeit der Entlüftung.

Darüber hinaus hat diese feuerbeständige Flüssigkeit eine hohe Thermooxydationsstabilität, hohe demulgierende Eigenschaften und erfordert keine Wiederherstellung im Prozeß des Betriebes.

Die erfindungsgemäße feuerbeständige Flüssigkeit weist eine höhere Widerstandsfähigkeit gegen Wasser und eine längere Lebensdauer auf.

Nach Ablauf der Betriebszeit können dabei die Betriebseigenschaften dieser Flüssigkeit leicht wiederhergestellt werden.

Die Anwendung von Titantetrachlorid als Veresterungskatalysator im erfindungsgemäßen Verfahren ermöglicht es, die Dauer dieses Prozesses bis auf 12 Stunden zu verkürzen.

**Patentansprüche**

1. Verfahren zur Herstellung einer feuerbeständigen Flüssigkeit durch Veresterung von Phosphoroxychlorid in Gegenwart eines Katalysators mit einem Gemisch, das aus Xylenol, Phenol und einer Fraktion des Verarbeitungsproduktes von Naturbrennstoff besteht, und anschließende Trennung der Fraktion des gebildeten Produktes, Reinigung und Trocknung derselben bis zur Erhaltung des Endproduktes, dadurch **gekennzeichnet,** daß man für die Veresterung ein Gemisch benutzt, das 3,5-Xylenol als Xylenol bei folgendem Verhältnis der Komponenten in Gew.-%, enthält:

| | |
|---|---|
| 3,5-Xylenol | 30 - 55 |
| Fraktion des Verarbeitungsproduktes von Naturbrennstoff mit einer Siedetemperatur von 216-224 °C | 18 - 22 |
| Phenol | alles übrige. |

2. Verfahren nach Anspruch 1, dadurch **gekennzeichnet,** daß man Titantetrachlorid als Katalysator benutzt.

**Claims**

1. A process for preparing a fire-resistant liquid by esterification of phosphorus oxychloride in the presence of a catalyst with a mixture comprising xylenol, phenol and a fraction of the processing product of natural fuel, and subsequent separation of the fraction of the product formed, purification and drying of the same to give the final product, characterized in that the mixture used for the esterification contains 3,5-xylenol as the xylenol with the following ratio of the components in per cent by weight:

| | |
|---|---|
| 3,5-Xylenol | 30 - 55 |
| Fraction of the processing product of natural fuel having a boiling point of 216-224 °C | 18 - 22 |
| Phenol | the balance. |

2. A process according to Claim 1, characterized in that the catalyst used is titanium tetrachloride.

**Revendications**

1. Procédé de préparation d'un liquide incombustible par estérification d'oxychlorure de phosphore en présence d'un catalyseur avec un mélange composé de xylénol, de phénol et d'une fraction du produit de traitement d'un combustible naturel, suivie de la séparation de la fraction contenant le produit formé, de la purification et du séchage dudit produit pour obtenir le produit final, caractérisé en ce que l'on utilise pour l'estérification un mélange contenant, comme xylénol, du 3,5-xylénol, les proportions des composants étant les suivantes (% en poids) :

| | |
|---|---|
| 3,5-xylénol | 30 - 55 |
| Fraction du produit de traitement d'un combustible naturel, ayant un point d'ébullition de 216-224 °C | 18 - 22 |
| Phénol | le reste |

2. Procédé selon la revendication 1, caractérisé en ce que l'on utilise du tétrachlorure de titane comme catalyseur.